# FASCICULE DE BREVET EUROPEEN

(11) **EP 1 532 316 B1**
(45) Date de publication et mention de la délivrance du brevet: **01.12.2010**
(21) Numéro de dépôt: 03760033.5
(22) Date de dépôt: 13.06.2003
(51) Int. Cl.: E01B 9/18, F16B 13/00

(54) **Gaine d'ancrage et organe compressible destiné à être placé au fond d'une gaine d'ancrage**
Verankerungshülse und komprimierbares Element für seine Verwendung in einer Verankerungshülse
Anchoring sleeve and compressible element to be inserted into an anchoring sleeve

(30) Priorité: 17.06.2002 FR 0207439
(43) Date de publication de la demande: 25.05.2005
(73) Titulaire: Vape Rail International en Abrege V.R.I., 01100 Oyonnax (FR)
(72) Inventeur: MAHIKIAN, Edmond, F-01130 Nantua (FR)
(74) Mandataire: Jeannet, Olivier
(86) Numéro de dépôt international: PCT/FR2003/001797
(87) Numéro de publication internationale: WO 2003/106768

(56) Documents cités:
- EP-A- 1 116 826
- DE-U- 9 003 797
- FR-A- 2 805 830
- US-A- 3 964 948

## Description

La présente invention concerne une gaine d'ancrage permettant l'assemblage d'un organe fonctionnel à un substrat dans lequel est noyée la gaine, selon le préambule de la revendication 1, et elle concerne aussi un organe compressible selon le préambule de la revendication 9.

Ledit organe fonctionnel peut en particulier être une vis ou un tire-fond et ledit substrat peut être un bloc de béton moulé autour de la gaine.

Une gaine selon l'invention est notamment destinée à être utilisée pour-la fixation d'un rail ferroviaire sur une traverse en béton.

Dans cette application spécifique, il est bien connu d'utiliser des gaines en matière synthétique fermées à une de leurs extrémités. Ces gaines sont noyées dans du béton moulé à la forme d'une traverse de chemin de fer, de telle sorte que leurs extrémités ouvertes débouchent sur la face supérieure de cette traverse, et reçoivent les tire-fonds assurant la fixation des rails.

Une telle gaine est livrée avec un capuchon de fermeture de son extrémité ouverte permettant d'éviter la pénétration de corps étrangers dans sa cavité, notamment d'eau ou de gravillons, lorsque la traverse qui la comporte est stockée en extérieur ou mise en place sur le chantier. Ces corps étrangers sont en effet susceptibles de s'opposer au vissage d'un tire-fond dans une gaine et, sous la pression du tire-fond, d'être à l'origine de fissurations du béton. Lors de la fixation du rail, les capuchons sont crevés au moyen d'une barre pour permettre la mise en place des tire-fonds.

Ces capuchons permettent normalement d'assurer une assez bonne étanchéité des gaines, sans que l'on puisse toutefois être certain que cette étanchéité est assurée dans tous les cas. En effet, les tolérances de fabrication des capuchons et des gaines peuvent laisser exister un interstice entre ces capuchons et gaines, par lequel de l'eau de ruissellement peut pénétrer dans la cavité d'une gaine ; les capuchons peuvent ne pas être parfaitement enfoncés et maintenus sur les gaines, et peuvent être arrachés lors des manipulations.

Le risque de fissuration du béton en cas de corps étrangers a pu être limité en équipant la gaine d'une coque métallique extérieure, formée par deux demi-coquilles assemblées. Cette coque augmente toutefois sensiblement le coût de fabrication d'une gaine.

Pour remédier à cet inconvénient, il a été envisagé de placer un tampon en matériau alvéolaire dans le fond de la gaine.

Un tel tampon a une efficacité incertaine dans le temps, liée à la pérennité limitée de ce type de matériau ou au risque de dégradation des propriétés de compressibilité de ce type de matériau au cours de cycles successifs de gel et de dégel. Ce problème d'efficacité résulte également du risque de déterioration du tampon lorsque l'organe fonctionnel vient porter contre un corps étranger rigide présent dans le fond de la gaine : l'organe fonctionnel, lorsqu'il est vissable, peut en effet entraîner ce corps étranger en rotation et réaliser un véritable hachage du tampon, privant ce dernier de toute efficacité ultérieure.

Il a également été envisagé de placer un bouchon en élastomère délimitant avec le fond de la gaine un compartiment étanche compressible. L'utilisation de ce bouchon pose plusieurs difficultés pratiques :
- En cas de mauvais positionnement du bouchon élastique lors de sa mise en place, le compartiment n'est pas étanche et la fonction recherchée n'est pas remplie.
- Le bouchon nécessite un insertion en force très difficile à réaliser sur une paroi spécifiquement ménagée à cet effet pour être retenu dans le fond de la gaine.
- L'insertion en force occasionne une immobilisation en rotation de l'élément élastique qui peut donner lieu au hachage par l'élément fonctionnel et à une détérioration du bouchon.
- L'utilisation du bouchon nécessite l'aménagement en fond de gaine d'une paroi tubulaire difficile à fabriquer.

En particulier, le document EP 1.116.826 A1 décrit à la fois l'utilisation d'un tampon et l'utilisation d'un bouchon élastique montrant les inconvénient cités ci-dessus.

La présente invention vise à remédier à ces inconvénients pratiques importants.

Son objectif est donc de fournir une gaine permettant d'éliminer efficacement tout risque de détérioration du substrat entourant la gaine lors de la mise en place d'un organe fonctionnel dans cette gaine, en s'affranchissant des problèmes précités de perte d'efficacité dans le temps d'un tampon en matériau alvéolaire ou de déterioration de ce tampon ou d'un bouchon, ou de difficultés d'utilisation du bouchon.

Un autre objectif de l'invention est de fournir une gaine restant facile à fabriquer, à un prix de revient acceptable.

La gaine concernée comprend, de manière connue en soi, un organe compressible placé au niveau de son fond, propre à être comprimé pour permettre l'effacement d'un corps étranger éventuellement présent dans la gaine lors de la mise en place dudit organe fonctionnel.

Selon l'invention, ledit organe compressible est constitué par une capsule en matériau déformable, creuse intérieurement, dont le volume intérieur est fermé de manière étanche par rapport à l'extérieur de la capsule.

Les capacités de compressibilité d'une telle capsule ne se dégradent pas dans le temps et ne sont pas affectées par des cycles successifs de gel et de dégel. La compression de l'air contenu dans la capsule lors de la compression de la capsule favorise le retour de la capsule à sa forme d'origine. De plus, une telle capsule a une structure relativement solide et homogène, et est à même de glisser contre les parois de la gaine lorsqu'elle est entraînée en rotation par rapport à cette gaine. La prise d'appui contre la capsule d'un corps étranger en fin de vissage dudit organe fonctionnel est donc sans effet irréversible sur la structure de cette capsule, au contraire d'un tampon en matériau alvéolaire. En effet, un tel tampon prend appui contre les parois de la gaine par de larges surfaces, qui induisent des frottements interdisant le pivotement de ce tampon par rapport à la gaine lorsqu'un corps étranger rigide vient rencontrer ce tampon. Ce corps étranger, s'il est entraîné en rotation par l'organe fonctionnel, provoque une détérioration irréversible de ce tampon, d'autant plus que la structure de ce tampon est fragile.

La capsule peut présenter une forme générale globalement cylindrique, avec une paroi périphérique droite venant à proximité de la paroi latérale de la gaine lorsque la capsule est placée dans cette gaine.

La capsule peut également présenter au moins une saillie périphérique, telle qu'une collerette, venant prendre appui contre la paroi latérale de la gaine lorsque la capsule est placée dans la gaine et assurant ainsi le maintien de la capsule dans la gaine par léger coincement.

La capsule peut également présenter au moins une saillie périphérique, telle qu'une collerette, comprenant une paroi latérale reliée au bord extérieur de cette saillie périphérique. Cette paroi latérale permet d'augmenter la surface d'appui de la capsule contre la paroi latérale de la gaine et donc d'assurer la prise d'appui de la capsule contre cette paroi latérale de la gaine, ce qui est particulièrement avantageux lorsque la gaine comporte un filet pour le vissage d'un organe fonctionnel vissable, afin d'assurer la prise d'appui de la capsule contre au moins une des spires du filet de la gaine. Cette paroi latérale de la capsule permet également de faciliter la mise en place de cette capsule dans cette gaine, en empêchant le basculement de cette capsule.

Au moins une portion de ladite paroi latérale de la capsule peut être inclinée vers l'extérieur de la capsule, de sorte que cette portion est légèrement déformée lorsque la capsule est engagée dans la gaine. Cette déformation permet de renforcer la prise d'appui de la capsule contre la paroi latérale de la gaine.

La capsule peut être formée par deux pièces présentant chacune un rebord périphérique, les rebords périphériques de ces pièces étant assemblés l'un à l'autre et formant ainsi l'une desdites saillies périphériques. La fabrication de la capsule au moyen de tells pièces permet l'obtention de cette capsule à un prix réduit. D'autres techniques de fabrication peuvent toutefois être utilisées, en particulier l'extrusion-soufflage.

Au moins une des parois axiales de la capsule peut présenter une forme convexe vue de l'extérieur de la capsule, de manière à augmenter le volume de la capsule.

Au moins une de ces mêmes parois axiales peut également présenter une pluralité de gradins, notamment circulaires et/ou concentriques. Ces gradins facilitent la déformation de la capsule ainsi que son retour dans sa forme neutre.

L'invention revendiquée comprend aussi l'organe défini par les caractéristiques de la revendication 9.

Pour sa bonne compréhension, l'invention est à nouveau décrite ci-dessous en référence au dessin schématique annexé représentant, à titre d'exemples non limitatifs, deux formes de réalisation de la gaine d'ancrage qu'elle concerne.
La figure 1 en est une vue côté, alors qu'un tire-fond est engagé en elle ;
la figure 2 est une vue de la gaine et du tire-fond en coupe passant par l'axe de cette gaine et de ce tire-fond, selon une première forme de réalisation ;
la figure 3 est une vue à échelle agrandie d'une extrémité de la gaine, également en coupe passant par l'axe de cette gaine, et
la figure 4 est une vue similaire à la figure 3, selon une deuxième forme de réalisation.

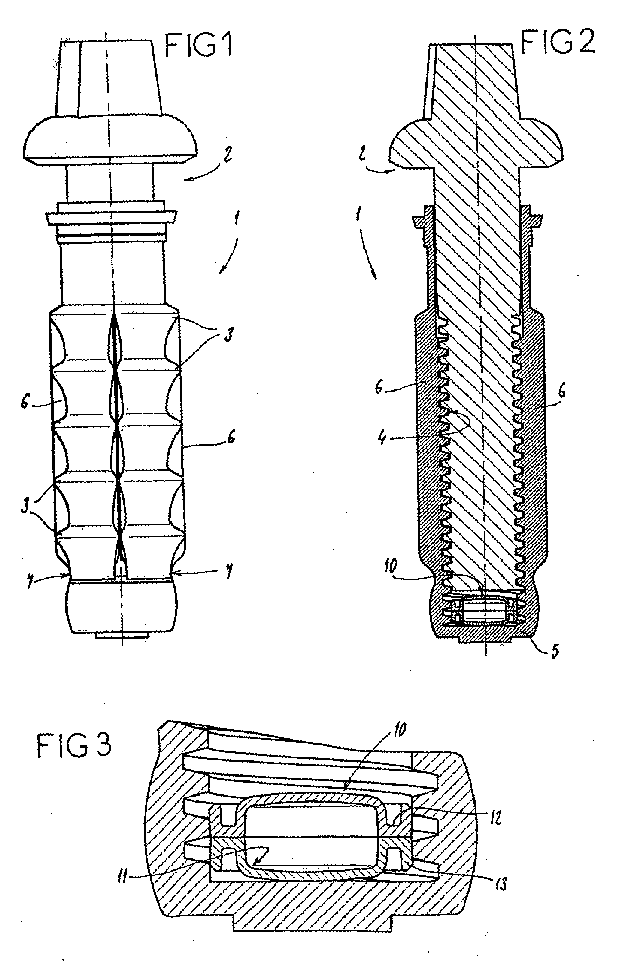

Les figures 1 et 2 représentent une gaine d'ancrage 1 utilisable pour le montage d'un rail ferroviaire sur une traverse en béton. Cette gaine 1 est, selon une technique bien connue, destinée à être noyée dans du béton moulé à la forme d'une traverse de chemin de fer, de telle sorte que l'une de ses extrémités débouche sur la face supérieure de cette traverse, et est destinée à recevoir un tire-fond 2 assurant la fixation d'un rail.

La gaine 1 comprend des saillies annulaires extérieures 3 pour sa prise d'appui dans le béton et un filet intérieur 4 pour permettre le vissage du tire-fend 2.

La gaine 1 est ouverte à son extrémité "supérieure", c'est-à-dire celle par laquelle le tire-fond 2 est destiné à être engagé en elle, et est fermée à son extrémité "inférieure", c'est-à-dire celle destinée à être noyée dans le béton, par une paroi 5.

En outre, dans l'exemple représenté, et selon une technique connue, la gaine 1 comprend deux saillies longitudinales 6 diamétralement opposées et reçoit deux demi-coquilles métalliques 7 épousant les saillies 3 et 6. Ces demi-coquilles 7 s'interrompent à distance de la partie d'extrémité inférieure de la gaine 1 et sont assemblées une à l'autre au niveau des bords libres des saillies 7.

Comme le montre la figure 2, la gaine 1 comprend une capsule 10 insérée en elle, placée contre le fond que forme la face interne de la paroi 5.

En référence à la figure 3, il apparaît que cette capsule 10 est formée par assemblage de deux pièces symétriques par rapport au plan diamétrale médian de la capsule 10.

Chaque pièce comprend partie centrale 11, un rebord périphérique 12 s'étendant radialement et une paroi latérale périphérique 13 s'étendant axialement, reliée au bord extérieur du rebord 12, et est réalisée en une matière synthétique déformable, telle qu'une polyoléfine ou un élastomère thermoplastique.

La partie centrale 11 de chaque pièce a une forme globalement cylindrique, avec une paroi latérale droite et une paroi axiale légèrement convexe vue du côté extérieur de la capsule 10, et est ouverte dans le plan du rebord 12. Elle délimite ainsi interieurement un espace vide.

Ces pièces sont assemblées l'une à l'autre au niveau des rebords 12, de manière à fermer avec étanchéité le volume intérieur de la capsule 10 constitué par lesdits espaces vides.

Lesdites pièces peuvent notamment être en une matière thermosoudable et être assemblées par thermosoudage au niveau des faces en regard des rebords 12.

Comme le montrent les figures 2 et 3, le diamètre externe de la capsule 10 correspond au diamètre interne de la gaine 1, de sorte que la capsule 10 peut être engagée dans cette gaine avec les parois 13 venant à proximité immédiate de la paroi latérale de la gaine 1.

La capsule 10, lorsqu'elle est placée au niveau du fond de la gaine 1, forme un organe compressible propre à être comprimé pour permettre l'effacement d'un corps étranger éventuellement présent dans la gaine 1 lors de la mise en place du tire-fond 2.

Les capacités de compressibilité de la capsule 10 ne se dégradent pas dans le temps et ne sont pas affectées par des cycles successifs de gel et de dégel que peut subir la gaine 1. De plus, la capsule 10 est à même de glisser, grâce à sa paroi 13, contre la paroi latérale de la gaine 1 lorsqu'elle est entraînée en rotation par rapport à cette gaine, de sorte que la prise d'appui contre elle d'un corps étranger présent dans la gaine 1 en fin de vissage du tire-fond 2 est sans effet irréversible sur la structure de cette capsule 10.

La paroi 13 permet en outre d'empêcher le basculement de la capsule 10 lors de son introduction dans la gaine 1.

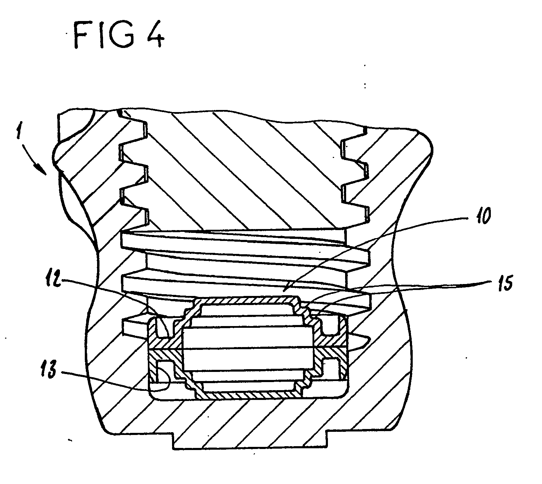

Dans le cas de la figure 4, les parois axiales de la capsule 10 comprennent une pluralité de gradins circulaires concentriques 15. Ces gradins 15 facilitent la déformation de la capsule 10 ainsi que son retour dans sa forme neutre.

Il apparaît de ce qui précède que l'invention apporte une amélioration déterminante à la technique antérieure, en fournissant une gaine d'ancrage permettant d'éliminer efficacement tout risque de détérioration du béton entourant la gaine lors de la mise en place du tire-fond dans cette gaine, c'est-à-dire sans risques de perte d'efficacité, notamment dans le temps, de l'organe compressible permettant l'effacement d'un corps étranger éventuellement présent dans la gaine. Cette gaine reste de plus facile à fabriquer, à un prix de revient acceptable.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Gaine d'ancrage (1) permettant l'assemblage d'un organe fonctionnel (2) à un substrat dans lequel est noyée la gaine (1), comprenant un organe compressible (10) placé au niveau de son fond, propre à être comprimé pour permettre l'effacement d'un corps étranger éventuellement présent dans la gaine (1) lors de la mise en place dudit organe fonctionnel (2) ;
gaine (1) **caractérisée en ce que** ledit organe compressible est constitué par une capsule (10) en matériau déformable, creuse intérieurement, dont le volume intérieur est fermé de manière étanche par rapport à l'extérieur de la capsule (10).

2. Gaine (1) selon la revendication 1, **caractérisée en ce que** la capsule présente une forme générale globalement cylindrique, avec une paroi périphérique droite venant à proximité de la paroi latérale de la gaine lorsque la capsule est placée dans cette gaine.

3. Gaine (1) selon la revendication 1, **caractérisée en ce que** la capsule présente au moins une saillie périphérique, telle qu'une collerette, venant prendre appui contre la paroi latérale de la gaine lorsque la capsule est placée dans la gaine et assurant ainsi le maintien de la capsule dans la gaine par léger coincement.

4. Gaine (1) selon la revendication 1, **caractérisée en ce que** la capsule (10) présente au moins une saillie périphérique (12) comprenant une paroi latérale (13) reliée au bord extérieur de cette saillie périphérique (12).

5. Gaine (1) selon la revendication 4, **caractérisée en ce qu'**au moins une portion de ladite paroi latérale de la capsule est inclinée vers l'extérieur de la capsule, de sorte que cette portion est légèrement déformée lorsque la capsule est engagée dans la gaine.

6. Gaine (1) selon l'une des revendications 3 à 5, **caractérisée en ce que** la capsule (10) est formée par deux pièces présentant chacune un rebord périphérique (12), les rebords périphériques (12) de ces pièces étant assemblés l'un à l'autre et formant ainsi l'une desdites saillies périphériques.

7. Gaine (1) selon l'une des revendications 1 à 6, **caractérisée en ce qu'**au moins une des parois axiales de la capsule (10) présente une forme convexe vue de l'extérieur de la capsule (10).

8. Gaine (1) selon l'une des revendications 1 à 7, **caractérisée en ce qu'**au moins une des parois axiales de la capsule (10) présente une pluralité de gradins (15), notamment circulaires et/ou concentriques.

9. Organe compressible (10), destiné à être placé au niveau du fond d'une gaine d'ancrage (1) qui permet l'assemblage d'un organe fonctionnel (2) à un substrat dans lequel est noyée la gaine (1), et propre à être comprimé pour permettre l'effacement d'un corps étranger éventuellement présent dans la gaine (1) lors de la mise en place dudit organe fonctionnel (2), **caractérisé en ce qu'**il consiste en une capsule (10) en matériau déformable, creuse intérieurement, dont le volume intérieur est fermé de manière étanche par rapport à l'extérieur de la capsule (10), ladite capsule (10) présentant au moins une saillie périphérique (12) comprenant une paroi latérale (13) reliée au bord extérieur de cette saillie périphérique (12).

10. Utilisation de la gaine d'ancrage (1) selon l'une des revendications 1 à 8 pour le montage d'un rail ferroviaire sur une traverse en béton.

## Claims

1. Anchoring sleeve (1) for assembling a functional member (2) to a substrate in which the sleeve (1) is embedded, comprising a compressible member (10) arranged at its base, designed to be compressed to mask a foreign body possibly present in the sleeve (1) when said functional member (2) is being installed;
sleeve (1) **characterized in that** said compressible member consists of an internally hollow cap (10) made of deformable material, the internal volume whereof is sealed relative to the outside of the cap (10).

2. Sleeve (1) according to claim 1, **characterized in that** the cap presents an overall cylindrical general form, with a right peripheral wall being close to the side wall of the sleeve when the cap is arranged in this sleeve.

3. Sleeve (1) according to claim 1, **characterized in that** the cap presents at least one peripheral projection, such as a flange, being supported against the side wall of the sleeve when the cap is arranged in the sleeve, thereby ensuring the cap is maintained in the sleeve by light squeezing.

4. Sleeve (1) according to claim 1, **characterized in that** the cap (10) presents at least one peripheral projection (12) comprising a side wall (13) connected to the edge external of this peripheral projection (12).

5. Sleeve (1) according to claim 4, **characterized in that** at least one portion of said side wall of the cap is inclined towards the outside of the cap, so that this portion is slightly deformed when the cap is engaged in the sleeve.

6. Sleeve (1) according to any one of claims 3 to 5, **characterized in that** the cap (10) is formed by two parts each presenting a peripheral edge (12), the peripheral edges (12) of these parts being assembled together, thereby forming one of said peripheral projections.

7. Sleeve (1) according to any one of claims 1 to 6, **characterized in that** at least one of the axial walls of the cap (10) presents a convex form seen from outside the cap (10).

8. Sleeve (1) according to any one of claims 1 to 7, **characterized in that** at least one of the axial walls of the cap (10) presents a plurality of especially circular and/or concentric steps (15).

9. Compressible member (10), intended to be arranged at the base of an anchoring sleeve (1) for assembling a functional member (2) to a substrate, wherein the sleeve (1) is embedded, and designed to be compressed to mask a foreign body possibly present in the sleeve (1) when said functional member (2) is being installed, **characterized in that** it consists of an internally hollow cap (10) made of deformable material, whereof the internal volume is sealed relative to the outside of the cap (10), said cap (10) presenting at least one peripheral projection (12) comprising a side wall (13) connected to the external edge of this peripheral projection (12).

10. Use of the anchoring sleeve (1) according to any one of claims 1 to 8 for assembling a railway rail on a concrete sleeper.

## Patentansprüche

1. Verankerungshülse (1), die die Befestigung eines Funktionselements (2) an einem Trägermaterial ermöglicht, in dem die Hülse (1) eingebettet ist, umfassend ein komprimierbares Element (10), das im Bereich ihres Unterteils platziert ist und dafür geeignet ist, komprimiert werden zu können, um während des Einbringens des Funktionselements (2) das Wegschieben eines möglicherweise in der Hülse (1) vorhandenen Fremdkörpers zu erlauben;
wobei die Hülse (1) **dadurch gekennzeichnet ist, dass** das komprimierbare Element aus einer Kapsel (10) aus einem verformbaren Material besteht, die innen hohl ist, deren Innenraum gegenüber dem Äußeren der Kapsel (10) dicht verschlossen ist.

2. Hülse (1) nach Anspruch 1, **dadurch gekennzeichnet, dass** die Kapsel in ihrer Gesamtheit im Wesentlichen zylindrisch geformt ist, mit einer geraden umlaufenden Wand, die nahe der Seitenwand der Hülse liegt, wenn die Kapsel in dieser Hülse platziert wird.

3. Hülse (1) nach Anspruch 1, **dadurch gekennzeichnet, dass** die Kapsel mindestens einen umlaufenden Vorsprung wie einen Bund aufweist, der an der Seitenwand der Hülse zur Anlage kommt, wenn die Kapsel in der Hülse platziert wird und so das Halten der Kapsel in der Hülse durch leichtes Festklemmen gewährleistet.

4. Hülse (1) nach Anspruch 1, **dadurch gekennzeichnet, dass** die Kapsel (10) mindestens einen umlaufenden Vorsprung (12) aufweist, der eine Seitenwand (13) umfasst, die mit dem Außenrand dieses umlaufenden Vorsprungs (12) verbunden ist.

5. Hülse (1) nach Anspruch 4, **dadurch gekennzeichnet, dass** mindestens ein Abschnitt der Seitenwand der Kapsel zum Äußeren der Kapsel geneigt ist, sodass dieser Abschnitt etwas verformt wird, wenn die Kapsel in die Hülse gesteckt wird.

6. Hülse (1) nach einem der Ansprüche 3 bis 5, **dadurch gekennzeichnet, dass** die Kapsel (10) von zwei Teilen gebildet wird, die jeweils einen umlaufenden Rand (12) aufweisen, wobei die umlaufenden Ränder (12) dieser Teile aneinander befestigt sind und so einen der umlaufenden Vorsprünge bilden.

7. Hülse (1) nach einem der Ansprüche 1 bis 6, **dadurch gekennzeichnet, dass** mindestens eine der axialen Wände der Kapsel (10) von außerhalb der Kapsel (10) betrachtet eine konvexe Form aufweist.

8. Hülse (1) nach einem der Ansprüche 1 bis 7, **dadurch gekennzeichnet, dass** mindestens eine der axialen Wände der Kapsel (10) eine Mehrzahl insbesondere kreisförmiger und/oder konzentrischer Absätze (15) aufweist.

9. Komprimierbares Element (10), das im Bereich des Unterteils einer Verankerungshülse (1) platziert werden soll, die die Befestigung eines Funktionselements (2) an einem Trägermaterial ermöglicht, in dem die Hülse (1) eingebettet ist, und das dafür geeignet ist, komprimiert werden zu können, um das Wegschieben eines während des Einbringens des Funktionselements (2) möglicherweise in der Hülse (1) vorhandenen Fremdkörpers zu erlauben, **dadurch gekennzeichnet, dass** es aus einer Kapsel (10) aus einem verformbaren Material besteht, die innen hohl ist, deren Innenraum gegenüber dem Äußeren der Kapsel (10) dicht verschlossen ist, wobei die Kapsel (10) mindestens einen umlaufenden Vorsprung (12) aufweist, der eine Seitenwand (13) umfasst, die mit dem Außenrand dieses umlaufenden Vorsprungs verbunden ist.

10. Verwendung der Verankerungshülse (1) nach einem der Ansprüche 1 bis 8 zur Befestigung einer Eisenbahnschiene auf einer Betonschwelle.
